# EUROPEAN PATENT APPLICATION

(11) **EP 1 918 760 A1**
(43) Date of publication of application: **07.05.2008**
(21) Application number: 06022927.5
(22) Date of filing: 03.11.2006
(51) Int. Cl.: G02C 7/02, B29D 11/00, G02C 7/06

(54) **Opthalmic lens, spectacles comprising ophthalmic lenses, apparatus for manufacturing an ophthalmic lens, method for manufacturing an opthalmic lens and a store comprising an apparatus for in store manufacturing of an ophthalmic lens**

(71) Applicant: Vision Dynamics Holding B.V., 5652 AC Eindhoven (NL)
(72) Inventor: The designation of the inventor has not yet been filed
(74) Representative: van Loon, C.J.J.

(57) **Abstract**

Ophthalmic lens, comprising at least two lens parts, wherein at least a first lens part having a concave surface and a convex surface, wherein at least the concave or convex surface of said first lens part is connected to a surface of a second lens part with aid of an adhesive, wherein the adhesive is a polyurethane substance with code name DP143108 or DP177108 as obtained from Chemtura Corporation. The invention further relates to an apparatus for manufacturing an ophthalmic lens, a method for manufacturing an ophthalmic lens and a store comprising an apparatus for in store manufacturing of an ophthalmic lens.

## Description

The invention relates to an ophthalmic lens, comprising at least two lens parts, wherein at least a first lens part having a concave surface and a convex surface, wherein at least the concave or convex surface of said first lens part is connected to a surface of a second lens part with aid of an adhesive.

Such an ophthalmic lens, formed by adhering two lens parts, is known from practice. Furthermore, such an ophthalmic lens is also known from US 4,645,317, which discloses an ophthalmic lens comprising a first lens part that is a single vision stock lens having conventional corrections in the negative or positive dioptre range or zero correction. The second lens part is a veneer over-lay lens part and is desirably formed of a plastic or glass material and forms a veneer cover for the stock lens. The veneer cover can contain a bifocal, trifocal of vocational modification of a given dioptre correction. The two lens parts are adhered to each other with aid of an optical cement.

A disadvantage of the known ophthalmic lens is that optical cement has a relative high shrinkage and therefore delamination of the lens can occur, resulting in an ophthalmic lens of inferior quality. Furthermore, ophthalmic lenses, manufactured by adhering two lens parts together have a certain thickness, being relatively thick. Normally, ophthalmic lenses are manufactured at a few specialised sites, as ordered by for instance an optician according to a prescription as measured by said optician or an oculist. The manufacture of such ophthalmic lenses is expensive because the lenses have to be ordered at the specialised lens manufacturer, are manufactured with a relative complicated process taking a long period of time and are transported in order to deliver the lenses to the different opticians.

It is therefore an object of the invention to provide an ophthalmic lens of the abovementioned type, wherein the disadvantages of the known lens are minimized. More particularly, it is an object of the invention to provide an ophthalmic lens of a high quality within a short period of time, that is at the same time easy to manufacture and relatively cheap.

In order to achieve this object, the ophthalmic lens according to the invention is characterized in that the adhesive is a polyurethane substance with code name DP143108 or DP177108 as obtained from Chemtura Corporation. Due to the characteristics of said polyurethane substance, two or more lens parts can be easily connected in a short period of time in order to form an ophthalmic lens having high optical qualities. The polyurethane substance has a low shrinkage during curing of the adhesive, which avoids delamination. Furthermore, due to the low shrinkage, the adhesive can be cured at a high temperature within a short period of time. Moreover, due to the characteristics of the adhesive, the manufactured ophthalmic lens is virtually stress free. Additionally, the structural strength of the hardened adhesive is very high. Consequently, very thin films for the adhesive can be used while still obtaining a very strong ophthalmic lens.

It is noted that ophthalmic lenses can be lenses to be used in spectacles, contact lenses, but also intra-ocular lenses that can be surgically placed behind the cornea of a person.

According to a further aspect of the invention, at least one of the lens parts is of the polyurethane substance with code name DP143108 or DP177108. By using a lens part of a similar material as the adhesive, the connection between said lens part and the adhesive will be blending after curing of the adhesive. Furthermore, lens parts of the polyurethane substance can be adhered in deformed shape. In addition, next to the structural strength of the hardened adhesive also the structural strength of the lens part is very high. Moreover, a pre-formed lens part, preferable formed by force less moulding, of the same material as the adhesive is also virtually stress free. Consequently, very thin lens parts can be used while still obtaining a very strong ophthalmic lens.

Because of the advantageous characteristics of the polyurethane substance, at least one of the lens parts, in further elaboration of the invention, has a relatively small thickness, being substantially less than 1 mm, more preferably in a range of 40 µm 200 µm. Said lens part can for example be manufactured by casting without force, resulting in a lens part without internal stress.

According to a further aspect of the invention, at least one of the lens parts is a form retaining part. The form retaining part provides the stability of the lens. However, when manufacturing an ophthalmic lens out of several thin lens parts no form retaining part is needed to obtain stability.

According to another aspect of the invention, at least one of the lens parts comprises an optical correction. This could be for instance a spherical correction, like a negative correction, a cylindrical correction or a combination thereof. The ophthalmic lens can correct one or more refractive abnormalities of the eye. For instance, myopia, hypermetropia, astigmatism, presbyopia or the like.

Furthermore, according to a further elaboration of the invention, also due to the advantageous characteristics of the polyurethane substance, like a high impact-resistance and being virtually stress less after curing, a lens part with a negative optical correction can have a central thickness of substantially less than 1 mm, more preferably in a range of 40 µm - 200 µm. Consequently, the ophthalmic lens has a relatively small overall thickness, resulting in a lightweight lens that is comfortable to wear.

In further elaboration of the invention, the adhesive comprises a colorant. In that case, the provided ophthalmic lens will be a coloured lens. It is also possible that the colorant comprises a photo chrome addition, the ophthalmic lens then being a photo chromatic lens.

According to another aspect of the invention, at least at one of the convex or concave surface of the lens a coating is provided. The coating can be at least one of a hard coating, preventing the lens against mechanical or other disturbances, an anti-reflective coating or a colour coating. The coating can be applied with known conventional techniques.

According to a further elaboration of the invention, the lens parts, each having an optical axis, are positioned in an angle between their respective optical axes with respect to each other, wherein the adhesive is provided in a recess between the two lens parts, the adhesive providing an (additional) optical correction. By using two lens parts with conventional standard optical corrections in combination with filling a recess there between, for instance having a prismatic form, a large amount of different ophthalmic lenses with different corrections can be easily provided. Because the recess can be formed as desired, endless combinations of optical corrections can be manufactured.

In an alternative embodiment of the invention, the lens parts, each having an optical axis, are positioned in an angle between their respective optical axes with respect to each other, wherein in a recess between the lens parts a further lens part is adhered, thereby providing an (additional) optical correction. This further lens part can for instance be a prismatic lens part, providing a prismatic correction to the ophthalmic lens.

In further elaboration of the invention, at least a first lens part comprises a cylindrical correction defining a cylindrical axis, and a second lens part comprises a near addition and/or a prismatic correction having a direction defined by an axis extending in a plane of said lens part, said first and second lens parts being positioned relative to each other having an angle between said respective axes. By positioning the cylindrical lens part with its cylindrical axis in an angle with respect to an axis defined by a direction of a further lens part having a near addition and/or a prismatic correction, a variety of ophthalmic lenses with different cylindrical corrections can be obtained out of only a small amount of cylindrical lens parts and lens parts with a near addition and/or a prismatic correction. The lens parts can be placed in every desirable angle relative to each other before adhering them together, providing many different ophthalmic lenses for instance for clients having astigmatism and needing a near addition for reading.

The invention further relates to an ophthalmic lens comprising at least two lens parts, wherein at least a first lens part having a concave and convex surface, wherein the concave or convex surface of said first lens part is connected to a surface of a second lens part with aid of an adhesive, characterized in that the lens parts, each having an optical axis, are positioned in an angle between their optical axes with respect to each other defining a recess, wherein the adhesive is provided in said recess. It is also possible that between the lens parts a further lens part is provided, for instance a prismatic lens part, said further lens part having an (additional) optical correction. As mentioned above, with relatively little different standard lens parts a large amount of different ophthalmic lenses can be produced. Also, for providing a cylindrical ophthalmic lens having a near addition and/or a prismatic correction it is possible that at least a first lens part comprises a cylindrical correction defining a cylindrical axis, and a second lens part comprises a near addition and/or a prismatic correction having a direction defined by an axis extending in a plane of said lens part, said first and second lens parts being positioned relative to each other having an angle between said respective axes. By changing the relative positions of both axes with respect to each other, a large amount of ophthalmic lenses having different corrections can be provided out of only a small selection of lens parts with different cylindrical corrections and lens parts with different near additions and/or prismatic corrections.

Furthermore, the invention relates to spectacles comprising two ophthalmic lenses, preferably above mentioned ophthalmic lenses, comprising at least two lens parts and a frame comprising frame elements for holding said lenses, wherein the lenses are at least partly connected to said frame elements with aid of an adhesive. Preferably, the adhesive is a polyurethane substance with code name DP143108 or DP177108 as obtained from Chemtura Corporation. Such spectacles are easy to manufacture and can be manufactured for instance by the optician right after the client chose a frame in the store. The client can choose a frame, buy glasses and take the manufactured spectacles home within a short period of time, without needing to return to the optician later on.

The lenses can for instance be provided in said spectacles by adhering respective first lens parts to respective first surfaces of the frame elements and adhering respective second lens parts to respective second opposite surfaces of the frame elements, wherein respective central parts of the first and second lens parts are substantially connected to each other.

The invention also relates to an apparatus for manufacturing an ophthalmic lens, preferably an above described ophthalmic lens, wherein the apparatus comprises a holding unit for holding at least two lens parts, an adhesive unit comprising separate adhesive components of the adhesive, and adapted to mix the separate components to form the adhesive before application thereof, an application unit for applying the adhesive to at least one lens part, a positioning unit for positioning the lens parts at a desired distance and/or desired angle with respect to each other, said angle being an angle between optical axes of respective lens parts and/or an angle between a cylindrical axis of a first lens part and an axis of a second lens part defined by a direction determined by a near addition and/or a prismatic correction of said second lens part and a heating unit for heating the lens parts comprising the applied adhesive in order to cure the adhesive. Such an apparatus provides similar effects and advantages as mentioned before in the description of the ophthalmic lens and the spectacles. The heating unit of the apparatus is for instance an oven or a microwave oven for heating the adhesive in order to cure it. The positioning unit can be adapted to accurately and evenly press the at least two lens parts together. After applying the adhesive to at least one of the lens parts, the positioning unit can move the parts toward each other, thereby accurately and evenly pressing such that the adhesive distributes on the parts without unwanted deformation of the separate lens parts.

An apparatus for manufacturing according to the invention provides further advantages in that no rest stress occurs in the therewith manufactured ophthalmic lenses, thereby avoiding unnecessary delamination and breaking of the lenses, for instance at further operations. The fact that the ophthalmic lenses are virtually stress free enables also the manufacturing of relatively thin lenses, which is advantageous with respect to aesthetic aspects of the lenses.

According to another aspect of the invention, in use the adhesive components are provided in a disposable packaging element, wherein the components are provided in separate spaces in said packaging element, wherein in use before providing adhesive to the application unit, the components are brought together in the packaging element and mixed. By using such a disposable package, the manufacturing apparatus needs less cleaning and the chance of machine failure decreases.

Additionally, the invention also relates to a method for manufacturing an ophthalmic lens, wherein at least two lens parts, wherein at least a first lens part having a concave surface and a convex surface, are provided, which concave or convex surface of said first lens part is adhered to a surface of a second lens part with aid of an adhesive, wherein the adhesive is a polyurethane substance with code name DP143108 or DP177108 as obtained from Chemtura Corporation. Such a method provides similar effects and advantages as mentioned before in the description of the ophthalmic lens, the spectacles and the apparatus.

According to another elaboration of the invention, at least one of the lens parts is deformed before adhering it to the other lens part and held in a deformed position during adhering, wherein after curing the adhesive the deformed position is maintained.

Finally, the invention also relates to a store comprising an amount of lens parts with different optical corrections and an apparatus for in store manufacturing of an ophthalmic lens with a desired optical correction directly after measuring eyes of a client in said store or according to a prescription, wherein the apparatus is adapted to adhere at least a first lens part with a first optical correction to a second lens part with a second optical correction in order to provide a lens with the desired optical correction. An optician can easily and within a short period of time manufacture an ophthalmic lens himself. For instance, a client's eyes can be measured and within an hour or a few hours, the client can leave the store with spectacles comprising lenses that have the appropriate optical correction. The optician only needs to have a small amount of lenses with standard optical correction in stock. It is also possible that for instance thin lens parts are used for measurement of the eyes of a client. Once the lens parts are in the correct position relative to each other, they can be adhered to each other in that position providing an instant ophthalmic lens. The shape of such a lens can be adapted afterward to fit in a spectacle frame.

It is noted that in US 4,645,317 is disclosed that a kit of veneer, containing bifocals, trifocals, vocational features and aspheric corrections, is provided to a retailer to be able to in store manufacture a laminated lens with a desired optical correction out of single vision inventory and the kit of veneer. However, the lenses manufactured out of this kit have the same disadvantages as mentioned before. Furthermore, the optician still needs to have a relative large amount of standard lens parts in stock.

The invention will be further elucidated by means of exemplary embodiments with reference to the accompanying drawings in which:
Figs. 1-6 show cross sectional view of an ophthalmic lens according different embodiments of the invention; and
Fig. 7 shows a top view of spectacles according to an embodiment of the invention.

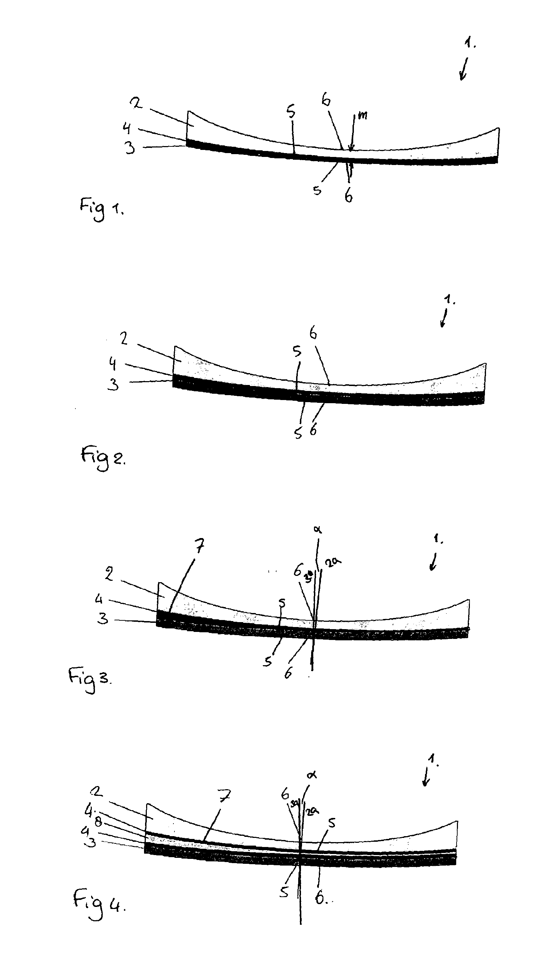

Figures 1-6 show different embodiments of ophthalmic lenses 1. Said lenses 1 comprise two lens parts 2, 3 having a convex surface 5 and a concave surface 6. The convex surface 5 of the first lens part 2 is connected to the concave surface 6 of the second lens part 3 with aid of an adhesive 4. The adhesive is a polyurethane substance with code name DP143108 or DP177108 as obtained from Chemtura Corporation.

Said polyurethane substance preferably is a two component polyurethane substance. DP143108 consists of a first component being a polyalcohol with a viscosity of 1,5 Pa.s. and a second component being an isocyanate functional pre-polymer with a viscosity of roughly 1 Pa.s. Furthermore, the polyurethane substance has an Abbe value of approximately 53, which means that the degree of chromatic aberration of the lens is relatively low. Because, structural strength, hardness and impact resistance of the hardened adhesive 4 is high, the manufactured ophthalmic lens can be thin. Preferably, the lens parts and the adhesive have a similar refractive index of approximately 1.5, thereby enabling the use of lens parts of for instance CR 39 and PMMA. Because, structural strength, hardness and impact resistance of the hardened adhesive 4 is high, the lens parts out of different material than the polyurethane substance can be thin, thereby also providing a thin ophthalmic lens. However, a lens part of the polyurethane substance has a better impact resistance than a lens part of CR 39.

The ophthalmic lens 1 according to the invention can be manufactured with aid of an apparatus (not shown) for manufacturing an ophthalmic lens 1. Two lens parts 2, 3 are provided, for instance to the apparatus for manufacturing ophthalmic lenses. The lens parts 2, 3 can be premanufactured by forceless moulding, having no internal stress. This is advantageous compared to for instance a lens part manufactured of polycarbonate. Because polycarbonate can only be injection moulded, the manufactured lens will have internal stress. Furthermore, the optical qualities of a lens of the polyurethane substance are better than the optical qualities of a polycarbonate lens.

The lens parts 2, 3 are held in a holding unit in the apparatus. The polyurethane substance is also provided in the apparatus, for instance in an adhesive unit. The polyurethane substance comprises two components that are mixed to obtain an adhesive 4. Mixture of the two components preferably takes place at a temperature of 50°-60°. The adhesive 4 can be distributed by an application unit, for instance by an application nozzle or due to capillarity between the two lens parts 2, 3 on at least one surface of a lens part 2, 3 to be adhered to another lens part 2, 3. The two lens parts 2, 3 are positioned together for instance by a positioning unit, thereby creating an even layer of adhesive between the two lens parts 2, 3. The positioning unit can also be adapted to position the lens parts 2, 3 relative to each other before the adhesive is applied and/or cured to at least one of the lens parts 2, 3. The positioning unit can for instance position the lens parts 2, 3 at a desired distance and/or desired angle, said angle being an angle between optical axes 2a, 3a of respective lens parts 2, 3 and/or an angle between a cylindrical axis of a first lens part 2 and an axis of a second lens part 3 defined by a direction determined by a near addition and/or a prismatic correction of said second lens part 2.

Then the lens parts and the adhesive are heated in order to cure the adhesive 4. This can be done in a heating unit, for instance an oven or a microwave oven. Due to the low shrinkage of the polyurethane substance during curing, it is possible to heat the lens to a high temperature. The obtained ophthalmic lens 1 is a very clear lens with good optical characteristics. The shrinkage during curing of the polyurethane substance is substantially lower than 1.5 volume %, thereby being much lower than the shrinkage of conventional substances having similar optical qualities.

Due to the high curing temperature of approximately 130°, the curing time can be relatively short, for instance between 30-120 minutes, depending on the volume of the adhesive or the thickness of the adhesive layer. An advantage of thermo curing in comparison with UV radiation curing is that thermo curing enables manufacturing of photo chrome lenses. Photo chrome lenses absorb UV radiation and thus UV radiation cannot be used for curing such lenses.

It is also possible to deform one of the lens parts 2, 3 before adhering it to the other lens part 2, 3. Deformation can, for instance, take place in the holding unit of the apparatus for manufacturing the ophthalmic lens 1. The deformation can be maintained if the lens part 2, 3 stays deformed during curing of the adhesive. Such a deformation can provide different optical characteristics of the ophthalmic lens 1. The deformation of a lens part of polyurethane substance is possible due to the thermo setting characteristics of said substance. The polyurethane substance has a low Tg (glass-rubber transition temperature) and a low HDT (heat distortion temperature), which make that the lens parts can be adhered in deformed position.

The manufactured ophthalmic lens 1 has excellent optical quality and is impact resistant. Furthermore, the lens can be easy and fast manufactured, for instance at non-specialised sites as at a store of an optician.

The ophthalmic lens 1 can be provided with a coating like a hard coating, an anti-reflective coating or a colour coating on either surface 5, 6 of said lens 1. Coating of the lens 1 can be done with conventional coating techniques, like dipping, spinning and spraying. It is also possible to provide a coating on one of the lens parts 2, 3 before adhering the parts 2, 3, to each other.

In figure 1, the ophthalmic lens 1 comprises a first lens part 2 that is a form retaining part. The first lens part 2 has a central thickness M of less than 1mm, preferably a thickness in a range of 40 µm - 200pm. This makes the ophthalmic lens 1 being a lightweight lens that is comfortable to wear. The second lens part 3 has a relatively small thickness, like a foil, of less than 540 µm, more particularly of less than 40µm. The convex surface 5 of the first lens part 2 is adhered to the concave surface 6 of the second lens part 3 with aid of the adhesive 4.

In figure 2, both lens parts 2, 3 are form-retaining parts. Both lens parts 2, 3 can comprise an optical correction, but it is also possible that only one part 2, 3 has an optical correction. Furthermore, the adhesive layer 4 can also provide an additional optical correction, for instance as depicted in figure 3. It is also possible that, in the case that a first lens part 2 comprises a cylindrical correction defining a cylindrical axis, and a second lens part 3 comprises a near addition and/or a prismatic correction having a direction defined by an axis extending in a plane of said lens part 3, said first and second lens parts 2, 3 are positioned relative to each other having an angle between said respective axes. Such an ophthalmic lens can be needed for instance for persons with astigmatism and presbyopia at the same time.

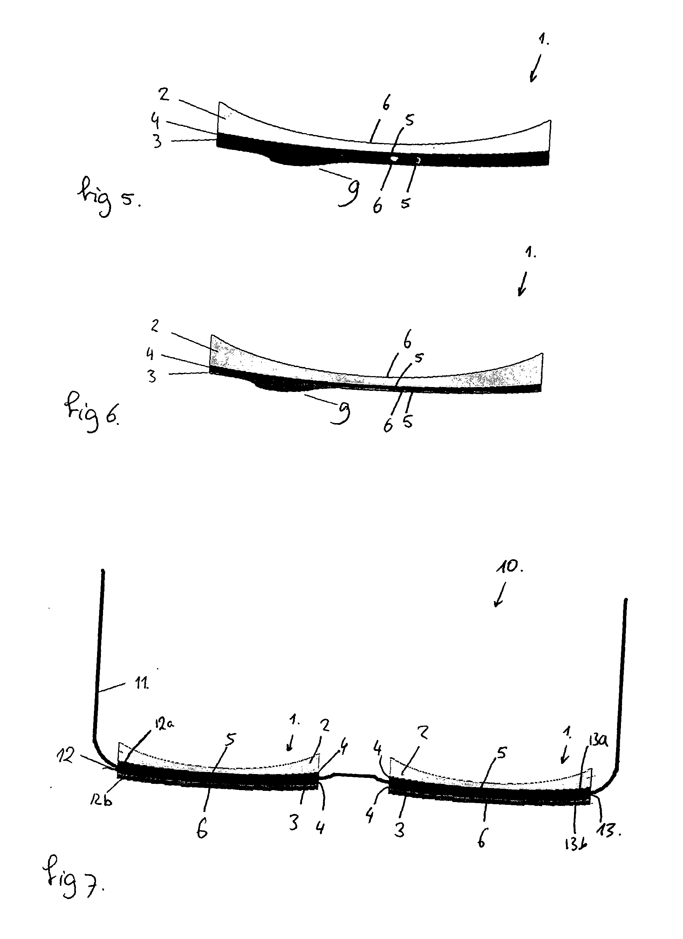

In figure 3, the lens parts 2, 3 are placed in an angle with respect to each other. A first optical axis 2a of the first lens part 2 is positioned in an angle a with respect to a second optical axis 3a of the second lens part 3. Between the lens parts 2, 3 a tapered recess 7 is provided that is filled with adhesive 4, providing a prismatic correction. Such a prismatic correction can also be obtained by placing a further lens part 8 in the tapered recess 7, as shown in figure 4. The adhesive 4 is then provided on both surfaces of the further lens part 8.

The optical correction can also comprise a near addition that is provided on a surface of at least one of the lens parts 2, 3. In figure 5, a near addition 9 is provided on the convex surface 5 of the second lens part 3, the second lens part 3 being a form retaining part. In figure 6 the near addition 9 is provided on the convex surface 5 of the second lens part 3, being a thin part.

Figure 7 shows spectacles 10 according to the invention. The spectacles 10 comprise a frame 11 and two ophthalmic lenses 1. The frame 11 comprises frame elements 12, 13 for holding the ophthalmic lenses 1. The lenses 1 are at least partly connected to the frame elements 12, 13 with aid of an adhesive 4. In this embodiment, the lenses 1 are adhered to the frame elements 12, 13 at the circumferential edges of the lenses 1. It is also possible that the lenses 1 are only partially adhered to the frame elements 12, 13. Preferably, the adhesive 4 is the polyurethane substance with codename DP143108 or DP177108. But it is also possible that another kind of adhesive is used.

In figure 7, the first lens parts 2 of the lenses 1 are adhered to a first surface 12a, 13a of the frame elements 12, 13. The second parts 3 are adhered to a second surface 12b, 13b of the frame elements 12, 13. The first and second parts 2, 3 of the lenses 1 are substantially connected to each other within the frame elements 11.

Although illustrative embodiments of the present invention have been described in greater detail with reference to the accompanying drawings, it is to be understood that the invention is not limited to these embodiments. Various changes or modifications may be effected by one skilled in the art without departing from the scope or spirit of the invention as defined in the claims. For instance, an ophthalmic lens having a prismatic correction can also be manufactured by two lens parts being placed in an angle with respect to each other, wherein the recess is filled with another material. Furthermore, it is clear that the ophthalmic lens can also comprise more than two lens parts, for instance three or four lens parts, depending on the desired optical correction and/or on the thickness of the individual lens parts.

## Claims

1. Ophthalmic lens, comprising at least two lens parts, wherein at least a first lens part having a concave surface and a convex surface, wherein at least the concave or convex surface of said first lens part is connected to a surface of a second lens part with aid of an adhesive, **characterized in that** the adhesive is a polyurethane substance with code name DP143108 or DP177108 as obtained from Chemtura Corporation.

2. Ophthalmic lens according to claim 1, wherein at least one of the lens parts is of the polyurethane substance with code name DP143108 or DP177108.

3. Ophthalmic lens according to claim 1 or 2, wherein at least one of the lens parts has a relatively small thickness, being substantially less than 1 mm, more preferably in a range of 40 µm - 200 µm.

4. Ophthalmic lens according to anyone of the preceding claims, wherein at least one of the lens parts is a form retaining part.

5. Ophthalmic lens according to any one of the preceding claims, wherein at least one of the lens parts comprises an optical correction.

6. Ophthalmic lens according to claim 5, wherein a lens part with a negative optical correction has a central thickness of substantially less than 1 mm, more preferably in a range of 40 µm - 200 µm.

7. Ophthalmic lens according to claim 6, wherein the optical correction comprises a near addition that is provided on a surface of at least one of the lens parts

8. Ophthalmic lens according to any one of the preceding claims, wherein the lens parts and the adhesive have a similar refractive index.

9. Ophthalmic lens according to any one of the preceding claims, wherein the adhesive comprises a colorant.

10. Ophthalmic lens according to claim 9, wherein the colorant comprises a photo chrome addition.

11. Ophthalmic lens according to any one of the preceding claims, wherein at least at one of the convex or concave surface of the lens a coating is provided.

12. Ophthalmic lens according to claim 11, wherein the coating is at least one of a hard coating, an anti-reflective coating, a colour coating.

13. Ophthalmic lens according to any one of the preceding claims, wherein the lens parts, each having an optical axis, are positioned in an angle between their respective optical axes with respect to each other, wherein the adhesive is provided in a recess between the two lens parts, the adhesive providing an (additional) optical correction.

14. Ophthalmic lens according to any one of claims 1-12, wherein the lens parts, each having an optical axis, are positioned in an angle between their respective optical axes with respect to each other, wherein in a recess between the lens parts a further lens part is adhered, thereby providing an (additional) optical correction.

15. Ophthalmic lens according to any of the preceding claims, wherein at least a first lens part comprises a cylindrical correction defining a cylindrical axis, and a second lens part comprises a near addition and/or a prismatic correction having a direction defined by an axis extending in a plane of said lens part, said first and second lens parts being positioned relative to each other having an angle between said respective axes.

16. Ophthalmic lens, comprising at least two lens parts, wherein at least a first lens part having a concave and a convex surface, wherein the concave or convex surface of said first lens part is connected to a surface of a second lens part with aid of an adhesive, **characterized in that** the lens parts, each having an optical axis, are positioned in an angle between their optical axes, with respect to each other defining a recess, wherein the adhesive is provided in said recess.

17. Ophthalmic lens according to claim 16, wherein between the lens parts a further lens part is provided, for instance a prismatic lens part, said further lens part providing an (additional) optical correction.

18. Ophthalmic lens according to claim 16 or 17, wherein at least a first lens part comprises a cylindrical correction defining a cylindrical axis, and a second lens part comprises a near addition and/or a prismatic correction having a direction defined by an axis extending in a plane of said lens part, said first and second lens parts being positioned relative to each other having an angle between said respective axes.

19. Spectacles comprising two ophthalmic lenses comprising at least two lens parts, preferably according to any one of the preceding claims, and a frame comprising frame elements for holding said lenses, wherein the lenses are at least partly connected to said frame elements with aid of an adhesive.

20. Spectacles according to claim 19, wherein the adhesive is a polyurethane substance with code name DP143108 or DP177108 as obtained from Chemtura Corporation.

21. Spectacles, according to claim 19 or 20, wherein respective first lens parts are adhered to respective first surfaces of the frame elements and respective second lens parts are adhered to respective second opposite surfaces of the frame elements, wherein respective central parts of the first and second lens parts are substantially connected to each other.

22. Apparatus for manufacturing an ophthalmic lens, preferably according to any one of claims 1-18, wherein the apparatus comprises a holding unit for holding at least two lens parts, an adhesive unit comprising separate adhesive components of the adhesive, and adapted to mix the separate components to form the adhesive before application thereof, an application unit for applying the adhesive to at least one lens part, a positioning unit for positioning the lens parts at a desired distance and/or desired angle with respect to each other, said angle being an angle between optical axes of respective lens parts and/or an angle between a cylindrical axis of a first lens part and an axis of a second lens part defined by a direction determined by a near addition and/or a prismatic correction of said second lens part, and a heating unit for heating the lens parts comprising the applied adhesive in order to cure the adhesive.

23. Apparatus according to claim 22, wherein in use the adhesive components are provided in a disposable packaging element, wherein the components are provided in separate spaces in said packaging element, wherein in use before supplying adhesive to the application unit, the components are brought together in the packaging element and mixed.

24. Apparatus according to claim 22 or 23, wherein the positioning unit is adapted to accurately and evenly press the at least two lens parts together.

25. Method for manufacturing an ophthalmic lens, wherein at least two lens parts, wherein at least a first lens part having a concave surface and a convex surface, are provided, which concave or convex surface of said first lens part is adhered to a surface of a second lens part with aid of an adhesive, wherein the adhesive is a polyurethane substance with code name DP143108 or DP177108 as obtained from Chemtura Corporation.

26. Method according to claim 25, wherein at least one of the lens parts is deformed before adhering it to the other lens part and held in a deformed position during adhering, wherein after curing the adhesive the deformed position is maintained.

27. Store comprising an amount of lens parts with different optical corrections and an apparatus for in store manufacturing of an ophthalmic lens with a desired optical correction directly after measuring eyes of a client in said store or according to a prescription, wherein the apparatus is adapted to adhere at least a first lens part with a first optical correction to a second lens part with a second optical correction in order to provide a lens with the desired optical correction.
